# EUROPEAN PATENT APPLICATION

(11) **EP 3 709 620 A1**
(43) Date of publication of application: **16.09.2020**
(21) Application number: 20160877.5
(22) Date of filing: 04.03.2020
(51) Int. Cl.: H04N 1/00

(54) **IMAGE FORMING APPARATUS**

(30) Priority: 12.03.2019 JP 2019045297
(71) Applicant: KYOCERA Document Solutions Inc., Osaka-shi, Osaka 540-8585 (JP)
(72) Inventor: OHARA, Ikuya, Osaka, 540-8585 (JP)
(74) Representative: Viering, Jentschura & Partner mbB Patent- und Rechtsanwälte

(57) **Abstract**

An image forming apparatus (1) includes a communication device (14) and a notification transmitting unit (21). The communication device (14) is capable of data communication with a server (3). The notification transmitting unit (21) transmits a notification to the server (3) using the communication device (14) when a transmission request for the notification is generated. The notification transmitting unit (21): (a) determines whether or not to transmit the notification under the transmission request based on an elapsed time from a previous transmission of the notification when the transmission request is generated; (b 1) immediately transmits the notification under the transmission request using the communication device (14) if it is determined that the notification under the transmission request is to be transmitted; and (b2) does not transmit the notification under the transmission request if it is determined that the notification under the transmission request is not to be transmitted.

## Description

### BACKGROUND

The present disclosure relates to an image forming apparatus.

In one system, an image forming apparatus transmits various notifications to a monitoring apparatus. The monitoring apparatus acquires the notifications from the image forming apparatus according to the priority level corresponding to the notification contents.

In another system, an image forming apparatus notifies a management apparatus that a jam has successively occurred a predetermined number of times during the printing of one page, and prohibits the notification of the jam when the time of jam state reaches a predetermined value.

### SUMMARY

An image forming apparatus according to this disclosure includes a communication device and a notification transmitting unit. The communication device is capable of data communication with a server. The notification transmitting unit transmits a notification to the server using the communication device when a transmission request for the notification is generated. The notification transmitting unit: (a) determines whether or not to transmit the notification under the transmission request based on an elapsed time from a previous transmission of the notification when the transmission request is generated; (b 1) immediately transmits the notification under the transmission request using the communication device if it is determined that the notification under the transmission request is to be transmitted; and (b2) does not transmit the notification under the transmission request if it is determined that the notification under the transmission request is not to be transmitted.

### BRIEF DESCRIPTION OF THE DRAWINGS

FIG. 1 is a block diagram showing a configuration of an image forming system including an image forming apparatus according to an embodiment of the present disclosure.
FIG. 2 is a block diagram showing a configuration of the image forming apparatus shown in FIG. 1.
FIG. 3 is a flowchart for explaining an operation of the image forming apparatus shown in FIG. 1 and FIG. 2.

### DETAILED DESCRIPTION

An embodiment of the present disclosure will now be described with reference to the accompanying drawings.

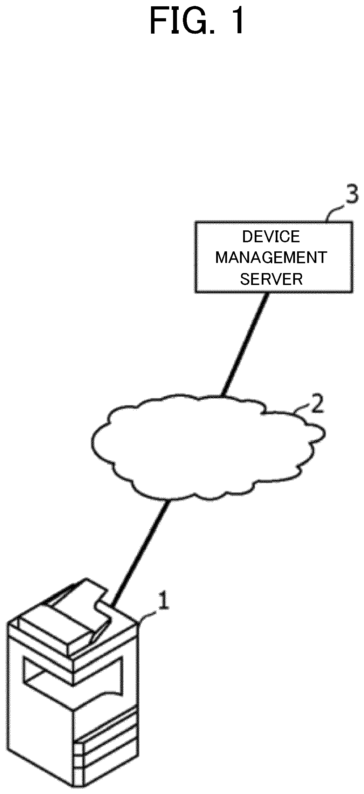

FIG. 1 is a block diagram showing a configuration of an image forming system including an image forming apparatus according to an embodiment of the present disclosure. In the system shown in FIG. 1, an image forming apparatus 1 is connected to a network 2. Further, the network 2 is connected to a device management server 3. The image forming apparatus 1 is a copying machine, a multifunction peripheral or the like. The network 2 is a wide area network (WAN) such as the Internet.

The device management server 3 collects the state information of the image forming apparatus 1, and performs the management and maintenance of the image forming apparatus 1 remotely. The image forming apparatus 1 transmits the state information of the image forming apparatus 1 to the device management server 3 as a notification.

The state information transmitted as a notification is varied in type and includes a device configuration (such as presence or absence of an optional device) of the image forming apparatus 1, a state change event (such as error information), a counter value of printing, and log information. The type of the state information may be managed by a hierarchical classification (such as a classification into large groups, medium groups, and small groups). For example, (a) with respect to the device configuration of the image forming apparatus 1, a transmission request for a notification is generated when the image forming apparatus 1 is activated, (b) with respect to the state change event, a transmission request for a notification is generated when the event occurs, and (c) with respect to the counter value and the log information, a transmission request for a notification is generated with a designated timing at the frequency designated by, for instance, a user setting (for example, once a day).

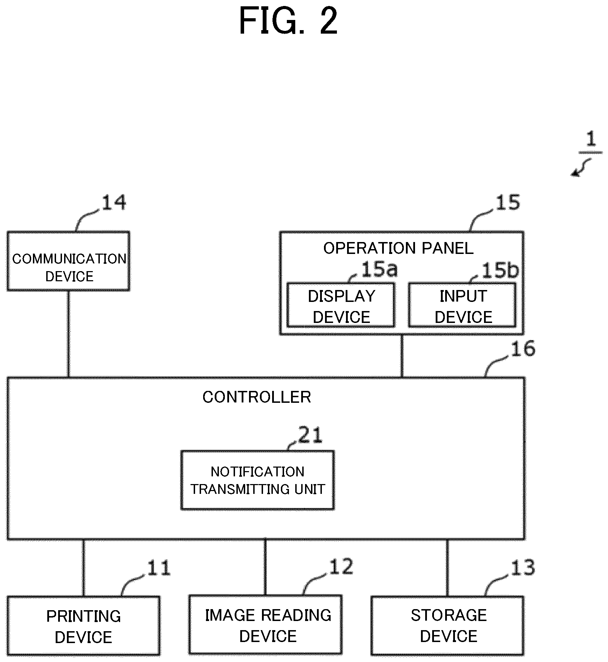

FIG. 2 is a block diagram showing the configuration of the image forming apparatus 1 shown in FIG. 1. As shown in FIG. 2, the image forming apparatus 1 includes a printing device 11, an image reading device 12, a storage device 13, a communication device 14, an operation panel 15, and a controller 16.

The printing device 11 prints an original image on a printing paper by a predetermined printing method such as an electrophotographic method. The image reading device 12 optically reads an original image and generates image data of the read image. The storage device 13 is a device capable of storing various kinds of data and programs. Nonvolatile large-capacity storage media such as a nonvolatile memory and a hard disk drive are usable as the storage device 13.

The communication device 14 is a network interface connected to the network 2, for example, and is a circuit capable of data communication with another device (such as the device management server 3) connected to the network 2.

The operation panel 15 is provided with a display device 15a arranged on the surface of the image forming apparatus 1 that displays various kinds of information to the user, and an input device 15b for detecting a user operation. A liquid crystal display, for example, is used as the display device 15a. As the input device 15b, a key switch, a touch panel or the like is used.

The controller 16 includes a computer, an application-specific integrated circuit (ASIC), and the like, and executes software processing and/or hardware processing using the computer and the ASIC to operate as various processing units. The computer includes a central processing unit (CPU), a read only memory (ROM), a random access memory (RAM), and the like, and operates as various processing units by loading a program from the ROM or the storage device 13 into the RAM and executing the program by the CPU.

In this embodiment, the controller 16 operates as the notification transmitting unit 21.

When a transmission request for a notification is generated in the image forming apparatus 1, the notification transmitting unit 21 transmits the notification to the device management server 3 using the communication device 14.

Specifically, the notification transmitting unit 21: (a) stores the transmission timing (date and time) of a notification in the storage device 13 as a log when the notification is transmitted (that is to say, successfully transmitted); (b) when a transmission request for the notification is generated, specifies the elapsed time from the previous transmission of the notification based on the log and determines whether or not to transmit the notification under the transmission request based on the elapsed time; (cl) immediately transmits the notification under the transmission request if it is determined that the notification under the transmission request is to be transmitted; and (c2) does not transmit the notification under the transmission request if it is determined that the notification under the transmission request is not to be transmitted.

In this manner, successive transmission of the notification is suppressed.

In addition, in this embodiment, the notification transmitting unit 21: (a) specifies the notification type (that is, the type of the state information as above) of the notification under the transmission request when the transmission request is generated; (b) specifies the reference time corresponding to the specified notification type; (c) determines whether or not the elapsed time from the previous transmission of the notification, which is of the specified notification type, exceeds the reference time; (dl) immediately transmits the notification under the transmission request using the communication device 14 if it is determined that the elapsed time exceeds the reference time; and (d2) does not transmit the notification under the transmission request if it is determined that the elapsed time does not exceed the reference time.

That is, the reference time is individually set for a plurality of notification types, and whether or not to transmit a notification for which a transmission request has been generated is determined based on the reference time corresponding to the notification type of the notification.

In this embodiment, moreover, if the notification transmitting unit 21 fails to transmit the notification due to the network communication failure, the load state of the device management server 3 or the like, the notification transmitting unit 21 stores the notification (namely, data to be transmitted) in the nonvolatile storage device 13, and transmits the notification as stored in the nonvolatile storage device 13 when a predetermined user operation is accepted or a transmission request from the device management server 3 is received. In that case, the notification transmitting unit 21, which has stored the notification in the storage device 13, displays a message indicating that the notification is stored in the storage device 13 on the display device 15a of the operation panel 15 and, when a predetermined user operation is detected by the input device 15b, immediately reads the notification from the storage device 13 and transmits the read notification to the device management server 3 using the communication device 14.

As a specific example, the notification transmitting unit 21 after storing the notification notifies the device management server 3 (by, for instance, transmitting an extensible markup language (XML) data briefly describing the timing at which the transmission request for the stored notification was generated, the type of the stored notification, and the like)that the notification has been stored, and the device management server 3 as notified that the notification has been stored automatically transmits a transmission request for the notification stored in the nonvolatile storage device 13 to the image forming apparatus 1 (the notification transmitting unit 21) at a predetermined timing (for example, at the time of light load). The device management server 3 may transmit a transmission request for the notification stored in the storage device 13 to the image forming apparatus 1 (the notification transmitting unit 21) in accordance with an instruction of a user of the image forming apparatus 1 or an operator of the device management server 3.

If failing to transmit the notification as described above, the notification transmitting unit 21 may determine whether or not to store the notification in the nonvolatile storage device 13 according to the notification type of the notification, so as to store the notification in the nonvolatile storage device 13 if determining to store the notification in the nonvolatile storage device 13 and not to store the notification in the nonvolatile storage device 13 if determining not to store the notification in the nonvolatile storage device 13. The notification which is not stored in the storage device 13 may immediately be discarded.

The notification transmitting unit 21 may immediately transmit the notification under the transmission request regardless of the elapsed time from the previous transmission of the notification when the transmission time of the notification is designated.

With respect to certain notification types such as the counter value, the notification transmitting unit 21 may not transmit the notification regardless of the elapsed time if the value in the previous notification is the same as the value in the notification to be currently transmitted. In that case, the notification is not transmitted when a predetermined function of the image forming apparatus 1 is not used and the counter value is not changed from the previous notification or when the same state change event occurs as the previous notification.

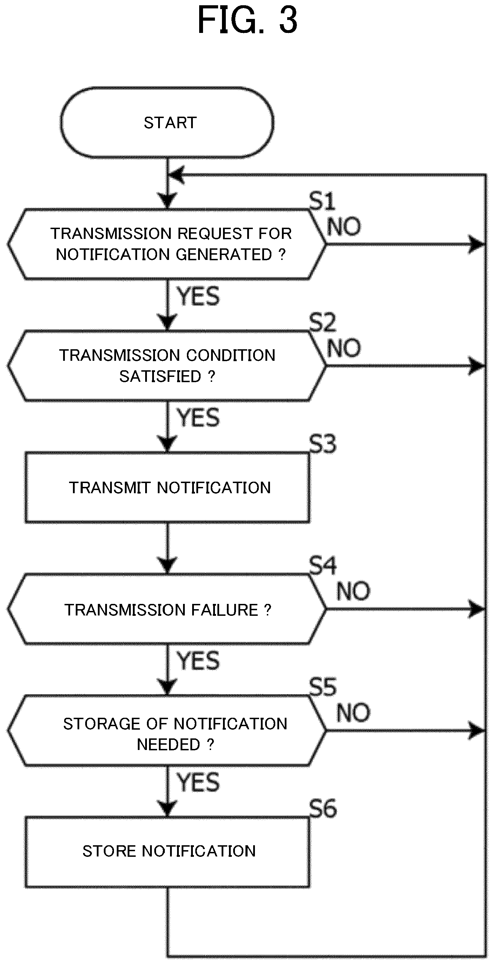

Next, the operation of the image forming apparatus 1 will be described. FIG. 3 is a flowchart for explaining the operation of the image forming apparatus 1 shown in FIG. 1 and FIG. 2.

The notification transmitting unit 21 monitors whether or not a transmission request for the notification as described above is generated (step S1), and when the transmission request for the notification is generated, determines whether or not the above-described transmission condition (whether or not the elapsed time from the previous transmission of the notification exceeds a predetermined value, for instance) is satisfied (step S2).

When it is determined that the transmission condition is satisfied, the notification transmitting unit 21 transmits the notification to the device management server 3 using the communication device 14 (step S3).

At this time, the notification transmitting unit 21 determines whether or not the transmission of the notification has met with failure (step S4) and, when it is determined that the transmission of the notification has met with failure, determines whether or not to store the notification in the storage device 13 based on the notification type (step S5).

When it is determined that the notification is to be stored in the storage device 13, the notification transmitting unit 21 stores the notification in the storage device 13 (step S6). Thereafter, the process returns to step S1, and the notification transmitting unit 21 continues the above-described monitoring. On the other hand, when it is determined that the notification is not to be stored in the storage device 13, the notification transmitting unit 21 returns to step S1 without storing the notification in the storage device 13, and continues the monitoring described above.

When the transmission of the notification in step S3 is successful, the notification transmitting unit 21 skips the processing in steps S4 to S6 and returns to step S1 to continue the monitoring described above.

When it is determined in step S2 that the transmission condition is not satisfied, the notification transmitting unit 21 does not transmit the notification to the device management server 3 but returns to step S1 to continue the monitoring.

As described above, according to the embodiment, the image forming apparatus 1 includes the communication device 14 and the notification transmitting unit 21. The communication device 14 is capable of data communication with the device management server 3. When a transmission request for a notification is generated, the notification transmitting unit 21 transmits the notification to the device management server 3 using the communication device 14. The notification transmitting unit 21: (a) determines whether or not to transmit the notification under the transmission request based on the elapsed time from the previous transmission of the notification, (b 1) immediately transmits the notification under the transmission request using the communication device 14 if determining to transmit the notification under the transmission request, and (b2) does not transmit the notification under the transmission request if determining not to transmit the notification under the transmission request.

As a result, it is possible to prevent a notification from being transmitted and received repeatedly until the time of the jam state reaches a predetermined value. Accordingly, redundant transmission of a notification, such as successive transmission of a notification within a short period of time, is suppressed, and communication packets required for the transmission of a notification are reduced. Consequently, the communication cost required for management and maintenance of the image forming apparatus 1 is reduced.

Various changes and modifications to the above described embodiment will be apparent to those skilled in the art. Such changes and modifications may be made without departing from the spirit and scope of the subject matter of the embodiment and without diminishing the intended advantages. That is, it is intended that such changes and modifications be included within the scope of the appended claims.

## Claims

1. An image forming apparatus (1) comprising:
a communication device (14) capable of data communication with a server (3); and
a notification transmitting unit (21) configured to use the communication device (14) to transmit a notification to the server (3) when a transmission request for the notification is generated,
wherein the notification transmitting unit (21): (a) determines whether or not to transmit the notification under the transmission request based on an elapsed time from a previous transmission of the notification when the transmission request is generated; (b 1) immediately transmits the notification under the transmission request using the communication device (14) if it is determined that the notification under the transmission request is to be transmitted; and (b2) does not transmit the notification under the transmission request if it is determined that the notification under the transmission request is not to be transmitted.

2. The image forming apparatus according to claim 1, wherein the notification transmitting unit: (a) specifies a notification type of the notification under the transmission request when the transmission request is generated; (b) specifies a reference time corresponding to the notification type specified; (c) determines whether or not the elapsed time from the previous transmission of the notification, which is of the notification type specified, exceeds the reference time; (dl) immediately transmits the notification under the transmission request using the communication device if it is determined that the elapsed time exceeds the reference time; and (d2) does not transmit the notification under the transmission request if it is determined that the elapsed time does not exceed the reference time.

3. The image forming apparatus according to claim 1, wherein the notification transmitting unit stores the notification in a nonvolatile storage device (13) if failing to transmit the notification and transmits the notification stored in the nonvolatile storage device when a predetermined user operation is accepted or a transmission request from the server is received.

4. The image forming apparatus according to claim 3, wherein the notification transmitting unit determines whether or not to store the notification in the nonvolatile storage device according to a notification type of the notification if failing to transmit the notification, stores the notification in the nonvolatile storage device if it is determined that the notification is to be stored in the nonvolatile storage device, and does not store the notification in the nonvolatile storage device if it is determined that the notification is not to be stored in the nonvolatile storage device.

5. The image forming apparatus according to claim 1, wherein the notification transmitting unit immediately transmits the notification under the transmission request regardless of the elapsed time from the previous transmission of the notification when a transmission time of the notification is designated.
